# EUROPEAN PATENT APPLICATION

(11) **EP 0 890 611 A1**
(43) Date of publication of application: **13.01.1999**
(21) Application number: 97202098.6
(22) Date of filing: 08.07.1997
(51) Int. Cl.: C08L 23/08, B32B 27/32, B65D 65/40

(54) **Packaging of flowable materials**

(71) Applicant: THE PROCTER & GAMBLE COMPANY, Cincinnati, Ohio 45202 (US)
(72) Inventor: Rogers, Neil John, 1020 Brussel (BE); Deflander, Joseph Fernand, 3150 Wespelaar (BE)
(74) Representative: Mather, Peter Geoffrey

(57) **Abstract**

The present invention relates to a process for sealing together opposing surfaces of flexible film, the flexible film comprising a sealing layer in a sealing region (90), whereby the sealing layer comprises a metallocene catalysed resin, the sealing step being characterised in that the sealing region (90) is at least partially covered with a flowable material (80) prior to and/ or during the sealing step, so that a leak-free seal is provided.

## Description

### Technical field

The invention relates to a process for sealing together opposing surfaces of flexible film, which can be used for example for sealing pouches or sachets containing flowable materials.

### Background of the invention

Various types of packages are formed from flexible film structures and prepared with a form-fill-seal process. Such processes comprise different steps allowing to prepare leak-free formed packages in a cost effective manner. A traditional process could be described in three successive steps, in which the package is firstly formed from the film structure, after what it is filled and finally sealed. Past improvements were mostly concerned with increasing the speed of the existing processes.

A way to optimise sealing speed is known from WO9500587 published on the 5^{th} of January 1995. The improvement is not achieved through a modification of the process but through a modification of the sealing materials, when metallocene catalysed polyolefins are used as a sealant layer. The advantage of this type of material is its low melting temperature. In case of heat sealing methods, there is a temperature range above which the seal would be burnt and below which the seal would not be sufficiently strong. For this reason, use of metallocene catalysed polyolefins as a sealant layer allows an enlargement of the sealing range because the bottom limit of the range, called the hot tack seal initiation temperature, is brought down as metallocene catalysed polyolefins melt at lower temperature when compared to traditional polyolefins. For example, the line speed of known packaging equipment used for manufacturing pouches such as form, fill and seal machines, is limited by the sealing properties of the traditional polyolefin films used in the machines. Traditional films have high hot tack seal initiation temperatures and a narrow sealing range. Therefore, the rate at which a form, fill and seal machine can produce pouches is limited. If the heat seal temperature range where one could obtain strong seals is broadened, then the speed of a form, fill and seal machine can be increased and, thus, the rate at which pouches can be produced can be increased. This improvement introduced by WO9500587 is quantitative as it allows an increased processing speed to be applied to known processes, such as those described in US-A-4 521 437.

The present invention relates to a process for sealing together opposing surfaces of flexible film, the flexible film comprising a sealing layer in a sealing region, whereby the sealing layer comprises a metallocene catalysed resin.

This improvement is applied to a well known sealing process described in US-A-4 521 437, patented on the 4^{th} of June 1985, which can be made on a so-called vertical form and fill machine. Using such a machine, a flat web of synthetic thermoplastic film is unwound from a roll and formed into a continuous tube in a tube forming section, by sealing the longitudinal edges on the film together to form a so-called lap seal of a so-called fin seal (70). The tube thus formed is pulled vertically downwards to a filling station. The tube is then collapsed across a transverse cross-section of the tube, the position of such cross-section being at a sealing device below the filling station. A transverse heat seal is made (71), by the sealing device, at the collapsed portion of the tube, thus making an air tight seal across the tube. The sealing device generally comprises a pair of jaws. After making the transverse seal, a pre-set quantity of material to be packaged, e.g. flowable material (80), is allowed to enter the tube, at the filling station, and fill the tube upwardly from the aforementioned transverse seal. The tube is then allowed to drop a predetermined distance under the influence of the weight of the material in the tube. The jaws of the sealing device are closed again, thus collapsing the tube at a second transverse section, which is above the air/material interface in the tube. The sealing device seals and severs the tube transversely at said second transverse section (90). The material-filled portion of the tube is now in the form of a pillow shaped pouch. Thus the sealing device has sealed the top of the filled pouch (91), sealed the bottom of the next-to-be-formed pouch (92) and separated the filled pouch from the next-to-be-formed pouch, all in one operation.

The existing processes described in US 4 521 437 aims to avoid what is called contamination of the sealing regions. Contamination occurs when the contained material enters the sealing region to seal prior or/and during the sealing operation. Contamination becomes particularly frequent as the package size reduces, because the level of the contained product is closer to the sealing region. Therefore, there is a chance that product can enter the seal region due to splashing or foaming (for liquid products), or because of bouncing and shaking (for powder products). In some cases, particularly concerning liquids or powders containing a high level of surfactants, this can lead to product leakage. For powder, the fine granules within the powder can prevent the flow of the sealing material in the seal region from contacting the seal surfaces. For the liquid, especially if viscous or if containing surfactants, the liquid can be difficult to squeeze out during the seal process because it can wet the region within the seal. Both these examples can result in lower seal strength or, in extreme situations, no seal at all.

Consequently, the contamination has to be prevented. In order to prevent contamination, the pre-set quantity of material to be packaged is reduced so that the air/material interface is brought down to a level at which contamination does not occur, after what sealing is made above the air/material interface as described in US-A-4 521 437 . Sealing can then be made in a faster and more reliable manner as the seal region is not contaminated. The disadvantage is that the volume available in the package is not used to maximum capacity, so that part of the package material is wasted.

The present invention is aiming at sealing through partial or complete contamination instead of avoiding contamination. The aim is to render it possible to seal through flowable materials, so that the packing process can be redesigned in a more efficient manner.

The present invention also encompasses a package comprising a container containing a flowable material, the container being formed from a flexible film, the film comprising at least one layer of a metallocene catalysed resin.

### Summary of the invention

The present invention provides a package as well as a process in a manner to satisfy the aforementioned needs.

The process of the invention is characterised in that the sealing region is at least partially covered with a flowable material prior to and/ or during the sealing step, so that a leak-free seal is provided.

In another aspect of the invention, a package is provided, characterised in that the package does not contain a gaseous phase.

### Detailed description of the invention

The invention will now be described by way of example and with reference to the accompanying drawings in which:
Figure 1 is a front view of a pouch in accordance with the present invention.
Figure 2 schematically illustrates a traditional transverse structure of flexible film used for a pouch.
Figure 3 schematically illustrates a transverse structure of flexible film used for a pouch according to the present invention.
Figure 4 is a front view of a sachet in accordance with the present invention.
Figure 5 schematically illustrates a traditional transverse structure of flexible film used for a sachet.
Figure 6 schematically illustrates a transverse structure of flexible film used for a sachet according to the present invention.
Figure 7 is a front view of a package prior to filling.
Figure 8 is a front view of a filled package prior to sealing.
Figure 9 is a front view of two packages, one being prior to filling, the other being prior to cutting.

The process of the present invention for sealing together opposing surfaces of flexible film, the flexible film comprising a sealing layer in a sealing region, whereby the sealing layer comprises a metallocene catalysed resin, has a sealing step characterised in that the sealing region is at least partially covered with a flowable material prior to and during the sealing step, so that a leak-free seal is provided.

As an essential feature the flexible film comprises at least a sealing layer comprising a metallocene catalysed resin. By "metallocene catalysed resin" it is to be understood herein that all different types of metallocene catalysed resins well known in the art, including metallocene catalysed polyolefine copolymers having olefinic monomers such as ethylene, propylene, butene, and the like, are suitable. Preferred herein are metallocene catalysed polyethylenes. Such polyethylenes are known to those skilled in the art, for example XU 59900.02 or XU 59900.17 are commercially available from Dow. This sealing layer is necessary to the invention as metallocene based resins are needed to overcome contamination. The metallocene made resin can be used as either a complete film or as a sealant layer to provide the benefits of the invention. When the metallocene made resin is used as a sealant layer, any other additional layers can be added on top of this layer.

The flexible film is either a blended or/and a laminated or/and a co-extruded or/and a single layer film. Preferred herein are laminated films comprising a polyethylene terephthalate layer, an other layer comprising linear low density polyethylene, low density polyethylene or linear low density polyethylene or a mixture thereof having a thickness comprised between 70 and 170 µm and at least one sealant layer comprising metallocene catalysed polyethylene and having a thickness comprised between 20 and 100 µm. Another preferred film is a co-extruded film comprising a 20 µm thick layer formed of low density polyethylene, an other 40 µm thick layer formed of linear low density polyethylene or polypropylene-copolymer and a 20 µm thick metallocene catalysed polyethylene layer. Preferably, the flexible film used has a thickness exceeding 10 µm. Furthermore, the qualities of co-extruded films comprising metallocene made resins can be used for packages which can be easily recyclable and produced at lower costs than, for example, laminated films, such as poly vinyl chloride laminated films.

The term "flowable materials" does not include gaseous materials, but encompasses materials which are flowable under gravity or may be pumped. Such materials include liquids, pastes, gels, emulsions or powders. The invention is particularly useful for flowable materials containing surfactants, which would introduce a high failure rate in existing sealing processes when contaminating the sealing region, as they can "wet" the seal region. Examples of failure are product leakage in line or after a period of time after package manufacture. The invention is also particularly useful when applied to viscous flowable materials, for example for flowable materials with a viscosity higher than 100 cps, because it is usually difficult to squeeze the flowable material out from the seal region during the sealing process.

The sealing region at least partially covered with the flowable material prior to and during the sealing step is at least partially contaminated by the flowable material. The sealing region can be contaminated in different ways. For example, contamination can occur because of an increased line speed of a packaging process, whereby the flowable material contained in the packages is getting into the seal region, due to splashing or foaming. In such a case, overcoming contamination results in the possibility of increasing the line speed. Contamination can also occur when the size of the package used in traditional processes is reduced, in such a way that the air/ flowable material interface is closer of the sealing region than it is when using traditional sealing processes. Full contamination occurs for instance when the air/ flowable material interface is beyond the sealing region, so that the volume contained between the opposing surfaces in the sealing region is essentially filled with the flowable material prior to and during the sealing step. In such a case, overcoming contamination results in the possibility of decreasing the package size for a given amount of flowable material. In particular, when the air/ flowable material interface is beyond the sealing region and contamination is overcome, the packages will not contain a gaseous phase, meaning that the flowable material will completely fill the volume available in the package so that it will form a unique phase. The flowable material phase may contain gas, as in the case of powder, but the gas is located within the flowable material phase, and does not form an independent isolated phase. Indeed, it is an object of this invention to provide packages with a reduced size for a given volume or weight of product. Additionally, it is an object of this invention to provide an ecological process for sealing whereby the package materials used can be recycled and the packages produced are used to maximum capacity, so that the amount of package material used is minimised.

The sealing step is provided by sealing means known to the man skilled in the art. It is preferably comprising the steps of applying a continuously heated element in contact with the film during sealing, and removing the element after sealing. This can be provided by a hot bar sealing element comprising jaws. In operation, the sealing jaws are closed. This allows the sealing layer to melt so as to make the seal. Other preferred sealing means include heated wheels which rotate. Generally, a physical barrier to the two sealing surfaces is created in the part of the sealing region which is contaminated. Use of metallocene catalysed resins as a sealant layer allows the sealant to flow around and/ or through contamination within the seal. This provides the ability to seal through contamination. Different seal types can be used. This includes fin seals and overlap seals. For overlap seals, it is preferred that the sealant layer is also on the outside of the film so as to provide a seal layer/ seal layer seal. Use of metallocene made resins as a sealant layer can allow a greater level of over sealing during the sealing step without a loss in production times. By "over sealing" it is meant that the seal forms in a shorter time due to less heat required to melt these materials when compared with conventional sealant. This can lead to more opportunity for the sealing layers to contact and therefore seal better. In a preferred embodiment of the present invention, the film used is a co-extruded film which has a difference between the seal initial temperature of the inside of the film and the melting point of the film of more than 30 degrees Celsius. Preferably, such films should contain a polyolefin outer layer with a melting point comprised between 110 and 160 degrees Celsius as well as a metallocene made resin sealant layer with a melting point comprised between 70 an 90 degrees Celsius, and such materials should be able to be co-extruded together into this co-extruded structure. This co-extruded structure can be processed more easily on hot bar sealing equipment, without the need for an expensive lamination step, as the film can be sealed without melting the whole film. The seal initiation temperature of metallocene made resins can be significantly lower than the one of traditional materials while the upper sealing temperature at which heat would degrade the plastic can remain the same as traditional materials. Indeed, it is an object of the present invention to provide a process allowing production of filled packages at a lower cost.

The sealing process of the invention can be used for making various packages types including berlingots, pouches, sachets, Pur-Packs, Tetra packs, yoghurt pots, film sealed over bottle openings (e.g. milk). A benefit of using such a process is that the film package size can be reduced because the air/ flowable material interface can be closer to the seal region with leak-free seal even when the flowable material enters into the sealing region and contaminates it. This is avoided in traditional processes as it would result in lower seal strength or no seal at all. Overcoming contamination can result in faster production speeds as well as reduced size packages. Speed can be increased compared to the traditional processes because the contamination produced by increased shaking, bouncing, splashing or foaming can be overcome by the process of the present invention. Indeed, it is an object of the present invention to compensate contamination while maintaining or improving the existing sealing speed of traditional processes.

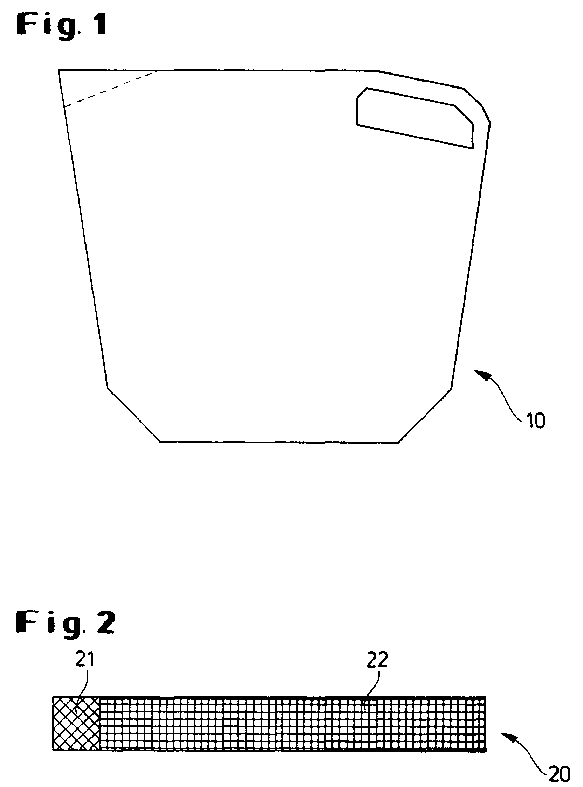

Figure 1 presents a preferred embodiment of the invention. It is a front view of a pouch (10) which can be sealed using the process of the invention. The pouch can be used for containing a standard heavy duty liquid formulation.

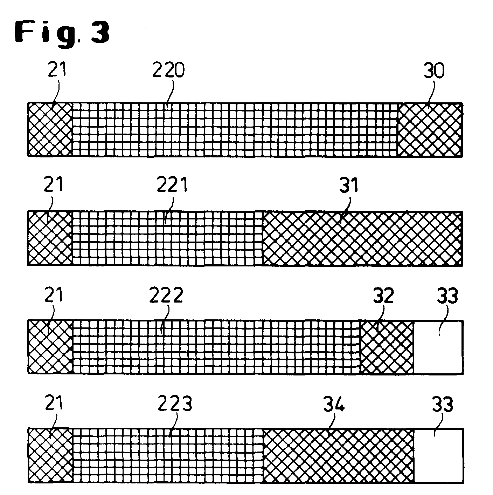

This particular pouch normally contains a flowable material. The film structure (20) traditionally used for this pouch is presented in figure 2. It is composed of a 12 µm standard polyethyl teraphtalate layer (21) laminated to a 180 µm low density polyethylene/ linear low density polyethylene layer (22). The polyethylene provides both sealing and strength qualities while the polyethyl teraphtalate provides perfume barrier, stiffness, a glossy finish as well as protection for the inks which are sandwich printed. Different structures can be used for applying the process of the invention. All of them comprise at least a layer of metallocene based material, some preferred embodiments comprise two layers. Some possible embodiments are presented in figure 3. These embodiments all comprise a layer of polyethyl teraphtalate similar to the one used in the traditional films. Two grades of metallocene based resins are proposed without limitation. XU 59900.17 offers excellent puncture performance and good sealing qualities, while the XU 59900.02 grade offers excellent sealing performance. A first preferred embodiment comprises a co-extruded film of 20 µm of XU 59900.17 (30) and 160 µm of low density polyethylene/ linear low density polyethylene (220), which is laminated with the polyethyl teraphtalate layer (21). A second preferred embodiment comprises a co-extruded film of 90 µm of XU 59900.17 (31) and 90 µm of low density polyethylene/ linear low density polyethylene, (221) which is laminated with the polyethyl teraphtalate layer (21). A third preferred embodiment comprises a co-extruded film of 20 µm of XU 59900.17 (32), 20 µm of XU 59900.02 (33) and 160 µm of low density polyethylene/ linear low density polyethylene (222) blown on a standard 3 layer co-extrusion blown film line, which is laminated with the polyethyl teraphtalate layer (21). A fourth preferred embodiment comprises a co-extruded film of 80 µm of XU 59900.17 (34), 20 µm of XU 59900.02 (33) and 80 µm of low density polyethylene/ linear low density polyethylene (223) blown on a standard 3 layer co-extrusion blown film line, which is laminated with the polyethyl teraphtalate layer (21).

Such a pouch has been sealed using a hot bar sealing unit run at different temperatures and seal times. The seal jaw profile is a 2x2 mm wide seal jaw. The film tested burn above a sealing temperature of 235 degrees Celsius.

Using a traditional sealing process and traditional sealing materials, the pouch filled with flowable materials has a functional seal only for temperatures above 165 degrees for a sealing time a seal time of 0.8 s. When using metallocene made resins as a sealant layer in the process of the invention, and with the pouch is filled with more flowable material, which represents full contamination of the sealing region, while speed can be increased up to 0.55 s sealing time while maintaining the same temperature.

This improvement both in filling levels and in sealing times is due to the metallocene based resins ability to seal through flowable material. Furthermore, the sealing temperature range is improved in this case by 45%. All seals were pressure tested using the on-line pressure tester and vacuum tested in a Multivac A300/16 vacuum during a time of 60 s at an external pressure of 50 mBar. All pouches were drop tested from 1 meter and 1.5 meter onto the pouch base. There was no failure in the conditions described.

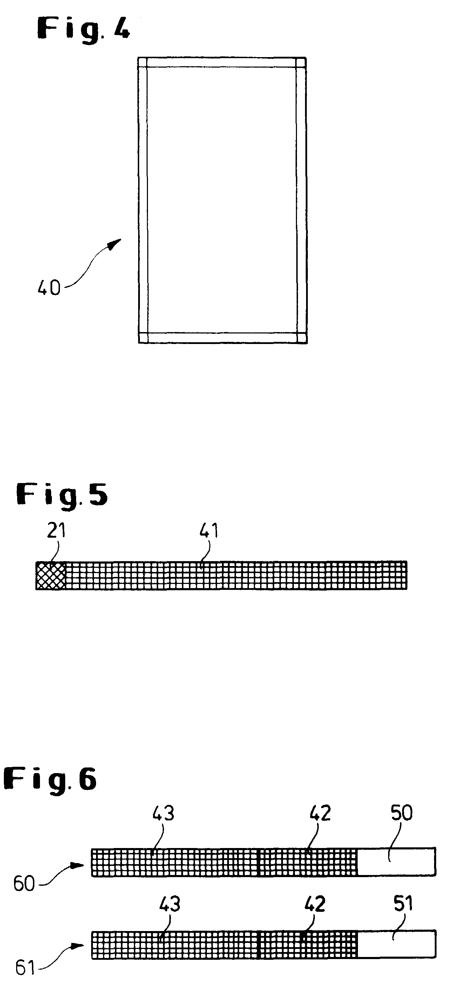

Figure 4 presents an other preferred embodiment of the invention. It is a front view of a sachet (40) which can be sealed using the process of the invention. The sachet can be used for containing a standard concentrated light duty liquid formulation. The film structure traditionally used for this sachet is presented in figure 5. It is composed of a 12 µm standard polyethyl teraphtalate layer (21) laminated to a 80 µm linear low density polyethylene/ medium density polyethylene/ linear low density polyethylene layer (41). The polyethylene provides both sealing and strength qualities while the polyethyl teraphtalate provides perfume barrier, stiffness, a glossy finish as well as protection for the inks which are sandwich printed. Different structures can be used for applying the process of the invention. All of them comprise at least a layer of metallocene based material. Some possible embodiments are presented in figure 6. These embodiments do not need to comprise a layer of polyethyl teraphtalate similar to the one used in the traditional films. Two grades of metallocene based resins are proposed without limitation: XU 59900.17 and XU 59900.02. A first preferred embodiment comprises a co-extruded film (60) of 20 µm of XU 59900.02 (50), 20 µm of low density polyethylene (42) and 40 µm of linear low density polyethylene-2740 (43) blown on a standard 3 layer co-extrusion blown film line. A second preferred embodiment comprises a co-extruded film (61) of 20 µm of XU 59900.17 (51), 20 µm of low density polyethylene (42) and 40 µm of linear low density polyethylene-2740 (43) blown on a standard 3 layer co-extrusion blown film line. New films proposed can be processed on the same traditional machines.

Using a traditional hot bar sealing process (Seal time 0.8 s, 50 Cycles/min) and traditional sealing materials, the sachet is with filled flowable materials but with a substantial gaseous head phase, otherwise product can get into the seal, and usually cause failure.

When using for example the structures of Figure 6 in the process of the invention whereby contamination is overcome and in the same conditions (Seal time 0.8 s, 50 Cycles/min) the sachet can be filled with more flowable material, which represents full contamination of the sealing region.

This improvement in filling levels is due to the metallocene based resins ability to seal through flowable material. All seals were pressure tested by placing a 8 kg weight on top of the sachets for 2 hours at 50 degrees. There was no failure in the conditions described.

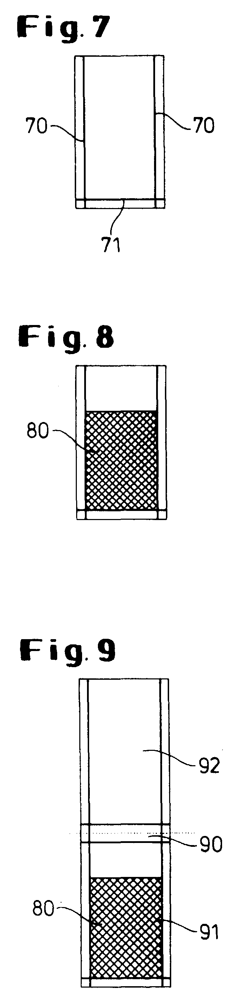

Figures 7 represents an embodiment of a package with longitudinal (70) and transverse (71) seals. Such a package can then be filled with flowable material (80) (Figure 8). If the process of the present invention is used, the filling level is such that contamination occurs, partially or completely, prior and/or during the sealing step in the sealing region (90) (Figure 9). It should be noted that the filling level of flowable liquid represented on Figures 8 and 9 is not limiting. Indeed, contamination depends on the filling level but also on other elements like speed of process.

## Claims

1. A process for sealing together opposing surfaces of flexible film, the flexible film comprising a sealing layer in a sealing region (90), whereby the sealing layer comprises a metallocene catalyzed resin (30, 31, 32, 33, 34, 50, 51), the sealing step being characterised in that the sealing region (90) is at least partially covered with a flowable material (80) prior to and/ or during the sealing step, so that a leak-free seal is provided.

2. A process as in Claim 1, characterised in that the volume contained between the opposing surfaces in the sealing region is essentially filled with the flowable material prior to and/ or during the sealing step.

3. A process as in Claim 1, characterised in that the sealing step is comprising the steps of applying a continuously heated element in contact with the film during sealing and removing the element after sealing.

4. A process as in Claim 1, characterised in that the flowable material is containing from 5 to 50 % of surfactants, preferably from 10 to 30%.

5. A process as in Claim 1, characterised in that the flowable material has a viscosity of at least 100 cps.

6. A process as in Claim 1, characterised in that the process is used for packing and sealing a container containing the flowable material, and comprising the steps of: partly forming the container from the flexible film, filling the partly formed container with the flowable material and sealing the container within the sealing region.

7. A process as in Claim 1, characterised in that the flexible film has a thickness of at least 10 µm.

8. A package comprising a container containing a flowable material, the container being formed from a flexible film, the film comprising at least one layer of a metallocene catalysed resin, characterised in that the package does not contain a gaseous phase.

9. A package containing a flowable material as in Claim 8, characterised in that the flowable material is containing from 5 to 50 % of surfactants, preferably from 10 to 30%.

10. A package containing a flowable material as in Claim 8, characterised in that the flowable material has a viscosity of at least 100 cps.

11. A package formed from a flexible film as in Claim 8, characterised in that the flexible film has a thickness of at least 10 µm.

12. A package containing a flowable material as in Claim 8, characterised in that the flowable material is a liquid.
